# EUROPEAN PATENT SPECIFICATION

(11) **EP 2 674 412 B1**
(45) Date of publication and mention of the grant of the patent: **18.04.2018**
(21) Application number: 13172125.0
(22) Date of filing: 14.06.2013
(51) Int. Cl.: C05F 3/06, A01C 3/02

(54) **Device, use of such a device and method for applying a determined quantity of a manure treating substance to manure**
Vorrichtung, Verfahren und Verwendung zur Applikation einer bestimmten Menge eines Güllebehandlungsmittels an Gülle
Dispositif, l'utilisation d'un tel dispositif et une méthode pour appliquer une quantité déterminée d'une substance de traitement au fumier

(30) Priority: 15.06.2012 NL 2009019
(43) Date of publication of application: 18.12.2013
(73) Proprietor: Rinagro B.V., 8756 JP Piaam (NL)
(72) Inventor: Joustra, Rinze, 8756 JP Piaam (NL)
(74) Representative: Land, Addick Adrianus Gosling

(56) References cited:
- EP-A1- 0 589 537
- DE-A1- 2 905 420
- NL-A- 8 901 220
- NL-A- 9 300 228

## Description

The invention relates to a device, use of such a device and method for applying a determined quantity of a manure treating substance to manure. Such a manure treating substance is for instance a mineral mixture developed by applicant and known under the name AgriMestMix®, or a mineral mixture developed by applicant and known under the name compost-O®. It has been found by applicant that periodic application of a determined quantity of AgriMestMix® or compost-O® to manure influences a process occurring therein, whereby the gas formation in the manure is halted or at least reduced and the emission of for instance ammonia and/or methane is reduced. The nitrogen hereby remains in the manure, whereby manure treated with AgriMestMix® or compost-O® is richer in nutrients for plants than untreated manure.

It is an object of the invention to provide a device and method of the type stated in the preamble with which a manure treating substance, for instance though not exclusively AgriMestMix® or compost-O®, can be applied easily and/or accurately and/or periodically to manure for the purpose of obtaining rich manure and/or reducing the emission of gases such as ammonia or methane.

Document EP 0 589 537 A1 discloses a method and device for increasing the dry matter content of manure by storing stackable manure. Condensed water formed on the uninsulated sloping roof of the chamber in which the manure is stored can be fed into a cavity via drip edges. The contaminated condensed water in the cavity is fed via channels to a collecting pit and can be sprayed over the stored manure by means of a pump, a line, and spray heads.

Document DE 29 05 420 A1 discloses an animal arrangement, wherein a spray is provided for spraying a disinfection agent and/or fermentation-limiting agent and/or odour-limiting agent.

NL 8 901 220 A and NL 9 300 228 A disclose also manure treatment devices.

The device of the type stated in the preamble comprises for this purpose according to the invention:
- a container for containing the substance;
- a conduit which is connected with a first end for medium throughflow to the container, and a second end of which extends into a space containing the manure;
- distributing means connected to the second end of the conduit for the purpose of distributed application of the substance over the manure;
- a dosing device for dosing the determined quantity of the substance;
- pump means for pumping the determined quantity of the substance out of the container via the conduit and for applying the determined quantity of the substance via the distributing means;
- adjustable control means for controlling the dosing device such that a set quantity of substance is dosed per set period of time,
- measuring means for determining a quantity of manure in the space, wherein the measuring means are coupled to the control means for setting a quantity of substance in accordance with the determined quantity of manure, and
- recording means for recording and storing, for a determined time duration which is longer than said period of time, the quantities of substance dosed per period of time.

Using the device according to the invention a quantity of the substance dosed by the dosing device can be pumped easily and/or accurately and/or periodically out of the container via the conduit using the pump means and applied in distributed manner to the manure via the distributing means.

The substance is preferably a liquid substance so that the substance can be pumped easily out of the container and applied easily to the manure via the conduit and the distributing means.

The distributing means are preferably disposed fixedly in a space in an animal accommodation in which the manure can be stored. This space is for instance a pit under the floor surface of the accommodation, on which floor surface the animals in the accommodation are located, which floor surface has openings for passage of manure produced by the animals from the floor surface to the pit. The distributing means for instance comprise a spray head connected for medium throughflow to the second end of the conduit, which spray head distributes the substance in a substantially horizontal direction over the manure in the space.

Alternatively, the conduit and/or the distributing means can be non-fixedly disposed so that for instance a user or an automatically displacing spray head or robot can apply the substance to the manure while the user, the spray head or the robot moves. The substance can in this way be applied in properly distributed manner to the manure, even in relatively large animal accommodation.

Depending on the size and/or the form of the animal accommodation a number of distributing means can be disposed in the space containing the manure. The second end of the conduit has for this purpose a number of branches, wherein each branch is connected to one of the distributing means such as a spray head.

The dosing device and the pump means can be mutually separated devices as well as a combined pump-dosing device. A combined pump-dosing device can for instance be a volume pump which pumps a determined flow rate of the substance out of the container and applies it to the manure for a determined period of time so that a determined quantity of the substance is applied to the manure.

The device according to the invention comprises adjustable control means for controlling the dosing device such that a set quantity of substance is dosed per set period of time.

The set period of time can be adjusted as desired, such as an hour or a number of hours, for instance twenty-four hours. A set quantity of substance can in this way be dosed and applied to the manure for instance per hour or per twenty-four hours.

The set quantity of substance is chosen in accordance with a quantity of manure present in the space.

The space comprises for this purpose measuring means for determining the quantity of manure in the space, which measuring means are coupled to the control means for setting a quantity of substance. It is also possible for the quantity of substance to be adjusted such that from a set zero setting it increases by a determined quantity or percentage with each elapsed period of time to an end setting or until resetting of the zero setting. The zero setting corresponds here to an empty space without manure, wherein in the first following period of time a determined minimum quantity of substance is applied to the manure, this quantity increasing with each subsequent period of time while the space fills with manure. As soon as the space has been emptied a user can reset the control means to their zero setting, or this can take place automatically if the animal accommodation is emptied with a particular regularity. The minimum quantity of substance and the percentage by which the quantity increases per period of time can for instance be determined on the basis of the number of animals present in the animal accommodation and the average manure production per animal.

The device according to the invention comprises recording means for recording and storing, for a determined time duration which is longer than said period of time, the quantities of substance dosed per period of time.

In this manner it is possible with the device according to the invention to record, and thereby demonstrate, that a determined quantity of the substance has been applied for the determined time duration per period of time to the manure present in the space. This recording and the thereby demonstrable treatment of the manure for instance enables the manure to be certified as treated manure which is rich in nutrients, whereby the treated manure can be sold with such a certificate.

In another embodiment of the device according to the invention the device comprises a second container for containing a liquid carrier for the substance, wherein the first end of the conduit comprises two branches and wherein a first branch of the first end is connected for medium throughflow to the container and a second branch of the first end is connected from medium throughflow to the second container.

Such a second container containing a liquid carrier is for instance advantageous when only a small quantity of the substance is applied to the manure. Such a small quantity of the substance has the drawback that the substance atomizes easily, which can be obviated by applying the substance mixed with a liquid carrier such as water to the manure.

Each branch of the first end preferably comprises an adjustable valve for respectively closing and leaving clear the medium throughflow connection to respectively the container and the second container, which valves are adjustable between a first position, in which the medium throughflow connection to respectively the container and the second container is closed, and a second position in which the medium throughflow connection to respectively the container and the second container is left clear, and wherein the valve of the first branch is configured to displace in each case with a determined delay relative to the valve of the second branch between the first position and the second position.

Because the valve of the first branch moves between the first position and the second position in each case with a determined delay relative to the valve of the second branch, the valve of the second branch will always be left clear first or closed first so that only the carrier, for instance water, is pumped and applied before as well as after pumping and application of the substance with carrier. The conduit and the distributing means are hereby cleaned by the carrier both prior to and following application of the substance with carrier. Opening and closing of the valve of the first branch with delay can for instance take place under the control of a timer.

The valve of the first branch can optionally be configured to displace in each case from the first position to the second position or from the second position to the first position with a determined delay relative to the valve of the second branch. The conduit and the distributing means are in this way cleaned by the carrier either before or after application of the substance with carrier.

The invention also relates to the use of a device according to any of the foregoing claims for applying a determined quantity of a manure treating substance to manure.

The invention also relates to a method for applying a determined quantity of a manure treating substance to manure, comprising the steps of:
a) dosing the determined quantity of the substance; and
b) applying the determined quantity of the substance in distributed manner over the manure
wherein the method is performed with a device according to the invention, which method comprises the step, to be performed prior to steps a) and b), of:
c) providing the device as described above, this device comprising:
   - a container for containing the substance;
   - a conduit connected with a first end for medium throughflow to the container, and a second end of which extends into a space containing the manure;
   - distributing means connected to the second end of the conduit for the purpose of distributed application of the substance over the manure;
   - a dosing device for dosing the determined quantity of the substance;
   - pump means for pumping the determined quantity of the substance out of the container via the conduit and for applying the determined quantity of the substance via the distributing means
   - adjustable control means for controlling the dosing device such that a set quantity of substance is dosed per set period of time,
   - measuring means for determining a quantity of manure in the space, wherein the measuring means are coupled to the control means for setting a quantity of substance in accordance with the determined quantity of manure, and
   - recording means for recording and storing, for a determined time duration which is longer than said period of time, the quantities of substance dosed per period of time,
wherein step a) is performed by the dosing device;
wherein step b) takes place by pumping the determined quantity of the substance out of the container using the pump means and applying the determined quantity of the substance in distributed manner to manure via the conduit and the distributing means, and
and wherein step c) is performed by said recording means.

As described above, the method according to the invention has the advantage that emission of for instance ammonia or methane is reduced and that the treated manure is richer in nutrients for plants than untreated manure.

Manure is obtained to which a determined quantity of manure treating substance has been applied using the device as described above and/or by applying the method as described above.

As described above, such treated manure is richer in nutrients for plants than untreated manure. Tests have shown particularly that the treated manure is advantageous for the soil biology of (agricultural) land, better utilizes the nitrogen in the manure and results in a better development of the root system of the plant, which results in a higher organic matter content in the soil.

In particular, manure is obtained to which a determined quantity of the manure treating substance is applied for a determined time duration per period of time. As described above, the application of the substance for the determined time duration per period of time can be recorded so that the manure can be certified as manure treated with the substance. The manure can be sold with this certificate.

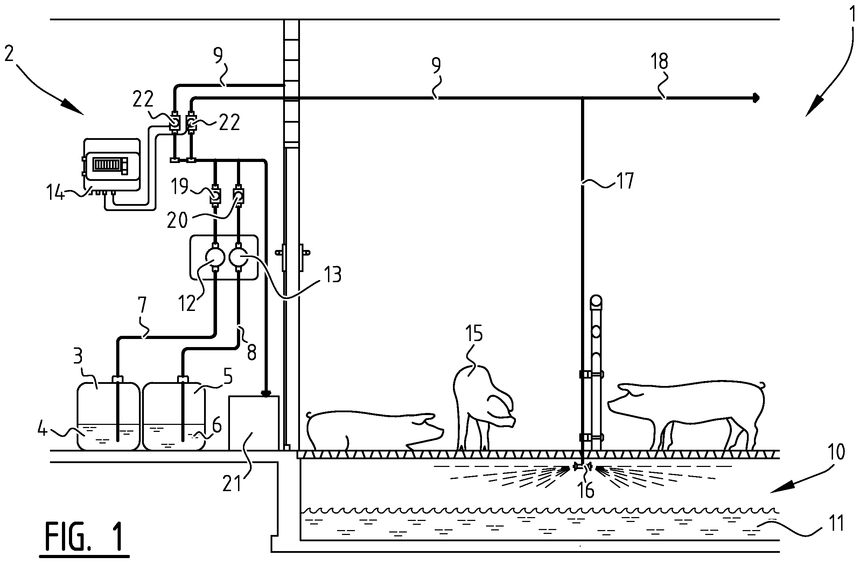

The invention will be further elucidated with reference to a figure shown in a drawing, the figure showing schematically an animal accommodation 1 with a device 2 according to the invention. Device 2 comprises two containers 3, 5, wherein a first container 3 contains a manure treating substance 4 and wherein the second container 5 contains water 6. A branch 7, 8 of a conduit 9 extends into each container 3, 5 so that substance 4 and water 6 can be applied via conduit 9 to manure 11 present in a pit 10 of animal accommodation 1. Depending on the size and/or the form of animal accommodation 1 the device 1 can comprise a number of conduits 9, wherein each conduit 9 extends into a determined part, also referred to as compartment, of animal accommodation 1. Figure 1 shows two conduits 9, wherein for the sake of simplicity only one conduit 9 is drawn into animal accommodation 1 and only a small part of the other conduit 9 is shown. Disposed in each conduit 9 is a magnetic valve 22 controllable by a control device 14 for closing or leaving clear conduit 9, as will be further elucidated hereinbelow. A total of for instance eight conduits with eight magnetic valves 22 can be disposed in the animal accommodation. At the end of conduit 9 extending into pit 10 a spray head 16 is arranged for medium throughflow, which spray head 16 applies substance 4 and water 6 distributed in substantially horizontal direction over manure 11. Depending on the size and/or form of animal accommodation 1 and pit 10, the or each conduit 9 can have a number of branches 17, 18, each connected to a spray head 16.

For the purpose of pumping and dosing a determined quantity of the substance 4 and a determined quantity of the water 6, device 1 comprises two volume pumps 12, 13 controllable by a control device 14, two magnetic valves 19, 20 coupled to the volume pumps 12, 13, and a second magnetic valve 22 disposed in the or each conduit 9. The or each magnetic valve 22 and the magnetic valves 19, 20 are controlled using control device 14 so as to displace for a determined time duration from a closed position to an open position for the purpose of leaving clear the conduit 9 and the medium throughflow connection between conduit 9 and branches 7, 8, and volume pumps 12, 13 are controlled so as to pump a determined flow rate of substance 4 and a determined flow rate of water 6 so that a determined quantity of substance 4 and a determined quantity of water 6 are dosed and pumped. Volume pumps 12, 13 are so-called diaphragm pumps driven by compressed air, the compressed air for driving pumps 12, 13 being supplied by a schematically shown compressor 21 connected to conduit 9. The compressed air has a pressure of a minimum of 3 bar. Volume pumps 12, 13 are adjustable from 0 to 100%, and the determined time duration that magnetic valves 19, 20 are in their open position is adjustable so that the determined quantity of substance 4 and the determined quantity of water 6 are adjustable, for instance in accordance with a quantity of manure 11 in pit 10. After pit 10 has been emptied and will be refilled from this zero setting with manure 11 coming from pigs 15, 100 ml of substance 4 is for instance applied the first time per spray head 16 to manure 11, and this 100 ml will be increased per period of time until, when pit 10 is almost full, for instance 200 ml is applied per spray head 16 to manure 11. The period of time here is for instance one day, so that a determined quantity of substance 4 increasing from 100 to 200 ml, and a determined quantity of water 6 are applied each day to manure 11. The stated quantities serve only as an indication and can be determined and adjusted in accordance with the quantity of manure 11 in pit 10. The quantity of manure 11 in pit 10 can for instance be determined on the basis of the number of pigs 15 present in the animal accommodation and the average manure production per pig 15 per day.

Control of magnetic valves 19, 20 and the or each magnetic valve 22 by means of control device 14 takes place as follows. For the purpose of opening the or each magnetic valve 22 control device 14 provides the or each magnetic valve 22 with an electric current, wherein magnetic valve 20 in the second branch 8 of conduit 9, which magnetic valve 20 closes and leaves clear the medium throughflow connection between conduit 9 and the second branch 8 of conduit 9, receives an electric current substantially simultaneously. The or each magnetic valve 22 and magnetic valve 20 hereby displace substantially simultaneously from their closed position to their open position so that water 6 is pumped out of container 5 and is applied via conduit 9 and spray head 16 to manure 11. As soon as the supply of the electric current to magnetic valves 20, 22 stops, magnetic valves 20, 22 will displace substantially simultaneously from their open position to their closed position. Magnetic valve 19, which closes and leaves clear the connection between conduit 9 and first branch 7 of conduit 9, is configured to displace in each case from its closed position to its open position and from its open position to its closed position a few seconds later than magnetic valves 20, 22. Device 1 can comprise for this purpose a timer (not shown), which timer transmits an electric current to magnetic valve 19 with a determined delay so that magnetic valve 19 opens later than magnetic valves 20, 22. Using the timer the electric current supplied to magnetic valve 19 also stops sooner than the electric current supplied to magnetic valves 20, 22 so that magnetic valve 19 also closes sooner than magnetic valves 20, 22. Water 6 will hereby be pumped out of container 5 a few seconds before substance 4 is pumped out of container 3, and water 6 will also be pumped out of container 5 for a few seconds after pumping of substance 4 out of container 3 has ceased, whereby water 6 cleans conduit 9 and spray head(s) 16 prior to and following application of substance 4 to manure 11.

Control device 14 also comprises recording means for recording and storing, for a determined time duration which is longer than said period of time, the quantities of substance 4 dosed per period of time. On the basis of these recorded data it is possible to demonstrate that a determined quantity of substance 4 has been applied to manure 11 for the determined time duration per period of time, on the basis of which manure 11 can obtain a certificate.

It is noted that the invention is not limited to the shown embodiments but also extends to variants within the scope of the appended claims.

## Claims

1. Device (2) for applying a determined quantity of a manure treating substance (4) to manure (11), comprising:
- a container (3) for containing the substance (4);
- a conduit (9) which is connected with a first end for medium throughflow to the container (3), and a second end of which extends into a space (10) containing the manure (11);
- distributing means (16) connected to the second end of the conduit (9) for the purpose of distributed application of the substance (4) over the manure (11);
- a dosing device (12) for dosing the determined quantity of the substance (4),
- pump means (12) for pumping the determined quantity of the substance (4) out of the container (3) via the conduit (9) and for applying the determined quantity of the substance (4) via the distributing means (16),
- adjustable control means (14) for controlling the dosing device (12) such that a set quantity of substance (4) is dosed per set period of time, and
- recording means for recording and storing, for a determined time duration which is longer than said period of time, the quantities of substance (4) dosed per period of time, **characterised by** comprising measuring means for determining a quantity of manure (11) in the space (10), wherein the measuring means are coupled to the control means (14) for setting a quantity of substance (4) in accordance with the determined quantity of manure (11).

2. Device as claimed in claim 1, comprising a second container (5) for containing a liquid carrier for the substance (4), wherein the first end of the conduit (9) comprises two branches (7, 8) and wherein a first branch (7) of the first end is connected for medium throughflow to the container (3) and a second branch (8) of the first end is connected from medium throughflow to the second container (5).

3. Device as claimed in claim 2, wherein each branch (7, 8) of the first end comprises an adjustable valve (19, 20) for respectively closing and leaving clear the medium throughflow connection to respectively the container (3) and the second container (5), which valves (19, 20) are adjustable between a first position, in which the medium throughflow connection to respectively the container (3) and the second container (5) is closed, and a second position in which the medium throughflow connection to respectively the container (3) and the second container (5) is left clear, and wherein the valve (19) of the first branch (7) is configured to displace in each case with a determined delay relative to the valve (20) of the second branch (8) between the first position and the second position.

4. Use of a device (2) as claimed in any of the foregoing claims for applying a determined quantity of a manure treating substance (4) to manure (11).

5. Method for applying a determined quantity of a manure treating substance (4) to manure (11), comprising the steps of:
a) dosing the determined quantity of the substance (4) per set period of time;
b) applying the determined quantity of the substance (4) in distributed manner over the manure (11); and
c) recording and storing, for a determined time duration which is longer than said period of time, the quantities of substance (4) dosed per period of time.
wherein the method is performed with a device (2) according to any of the claims 1-3, comprising the step, to be performed prior to steps a) and b), of:
d) providing the device (2) according to any of the claims 1-3, this device comprising:
- a container (3) for containing the substance (4);
- a conduit (9) connected with a first end for medium throughflow to the container (3), and a second end of which extends into a space (10) containing the manure (11);
- distributing means (16) connected to the second end of the conduit (9) for the purpose of distributed application of the substance (4) over the manure (11);
- a dosing device (12) for dosing the determined quantity of the substance (4),
- pump means (12) for pumping the determined quantity of the substance (4) out of the container (3) via the conduit (9) and for applying the determined quantity of the substance (4) via the distributing means (16),
- adjustable control means (14) for controlling the dosing device (12) such that a set quantity of substance (4) is dosed per set period of time,
- measuring means for determining a quantity of manure (11) in the space (10), wherein the measuring means are coupled to the control means (14) for setting a quantity of substance (4) in accordance with the determined quantity of manure (11),
- recording means for recording and storing, for a determined time duration which is longer than said period of time, the quantities of substance (4) dosed per period of time
wherein step a) is performed by the dosing device (12), and
wherein step b) takes place by pumping the determined quantity of the substance out of the container using the pump means (12) and applying the determined quantity of the substance (4) in distributed manner to manure via the conduit (9) and the distributing means (16),
and wherein step c) is performed by said recording means.

## Patentansprüche

1. Vorrichtung zur Applikation einer bestimmten Menge eines Güllebehandlungsmittels (4) auf Gülle (11), die aufweist:
- einen Behälter (3) zum Aufnehmen des Mittels (4);
- einen Kanal (9), der mit einem ersten Ende für einen Mediendurchfluss mit dem Behälter (3) verbunden ist, und dessen zweites Ende sich in einen Raum (10) erstreckt, der die Gülle (11) enthält:
- eine Verteilungseinrichtung, die zu dem Zweck der verteilten Applikation des Mittels (4) über die Gülle (11) mit dem zweiten Ende des Kanals (9) verbunden ist;
- eine Dosierungsvorrichtung (12) zum Dosieren der bestimmten Menge des Mittels (4),
- eine Pumpeneinrichtung (12) zum Pumpen der bestimmten Menge des Mittels (4) aus dem Behälter (3) über den Kanal (9) und zum Anwenden der bestimmten Menge des Mittels (4) über die Verteilungseinrichtung (16),
- eine einstellbare Steuereinrichtung (14) zum Steuern der Dosiervorrichtung (12), so dass eine festgelegte Menge des Mittels (4) pro festgelegter Zeitspanne dosiert wird,
- eine Aufzeichnungseinrichtung zum Aufzeichnen und Speichern der Mengen des pro Zeitspanne dosierten Mittels (4) über eine bestimmte Zeitdauer, die länger als die genannte Zeitspanne ist, **dadurch gekennzeichnet, dass** sie Messeinrichtungen zum Bestimmen einer Menge der Gülle (11) in dem Raum (10) aufweist, wobei die Messeinrichtungen mit der Steuereinrichtung (14) gekoppelt sind, um eine Menge des Mittels (4) gemäß der bestimmten Menge an Gülle (11) festzulegen.

2. Vorrichtung nach Anspruch 1, die einen zweiten Behälter (5) zum Aufnehmen eines flüssigen Trägers für das Mittel (4) aufweist, wobei das erste Ende des Kanals (9) zwei Zweige (7, 8) aufweist und wobei ein erster Zweig (7) des ersten Endes für den Mediendurchfluss mit dem Behälter (3) verbunden ist, und ein zweiter Zweig (8) des ersten Endes für den Mediendurchfluss mit dem zweiten Behälter (5) verbunden ist.

3. Vorrichtung nach Anspruch 2, wobei jeder Zweig (7, 8) des ersten Endes ein einstellbares Ventil (19, 20) zum jeweiligen Schließen und Freilassen der Mediendurchflussverbindung zu dem jeweiligen Behälter (3) und dem zweiten Behälter (5) aufweist, wobei die Ventile (19, 20) zwischen einer ersten Position, in welcher die Mediendurchflussverbindung mit dem Behälter (3) und dem zweiten Behälter (5) jeweils geschlossen ist, und einer zweiten Position, in welcher die Mediendurchflussverbindung mit dem Behälter (3) und dem zweiten Behälter (5) jeweils frei gelassen wird, einstellbar sind, und wobei das Ventil (19) des ersten Zweigs (7) aufgebaut ist, um sich in jedem Fall mit einer bestimmten Verzögerung relativ zu dem Ventil (20) des zweiten Zweigs (8) zwischen der ersten Position und der zweiten Position zu verschieben.

4. Verwendung einer Vorrichtung (2) nach einem der vorhergehenden Ansprüche zur Applikation einer bestimmten Menge eines Güllebehandlungsmittels (4) auf Gülle (11).

5. Verfahren zur Applikation einer bestimmten Menge eines Güllebehandlungsmittels (4) auf Gülle (11), das die folgenden Schritte aufweist:
a) Dosieren der bestimmten Menge des Mittels (4) pro festgelegter Zeitspanne;
b) Anwenden der bestimmten Menge des Mittels (4) in einer verteilten Weise über die Gülle (11); und
c) Aufzeichnen und Speichern der Mengen des pro Zeitspanne dosierten Mittels (4) über eine bestimmte Zeitdauer, die länger als die genannte Zeitspanne ist,
wobei das Verfahren mit einer Vorrichtung (2) nach einem der Ansprüche 1 - 3 durchgeführt wird, wobei es den folgenden Schritt aufweist, der vor den Schritten a) und b) durchgeführt werden soll:
d) Bereitstellen der Vorrichtung (2) nach einem der Ansprüche 1 - 3, wobei diese Vorrichtung aufweist:
- einen Behälter (3) zum Aufnehmen des Mittels (4);
- einen Kanal (9), der mit einem ersten Ende für einen Mediendurchfluss mit dem Behälter (3) verbunden ist, und dessen zweites Ende sich in einen Raum (10) erstreckt, der die Gülle (11) enthält:
- eine Verteilungseinrichtung (16), die zu dem Zweck der verteilten Applikation des Mittels (4) über die Gülle (11) mit dem zweiten Ende des Kanals (9) verbunden ist;
- eine Dosierungsvorrichtung (12) zum Dosieren der bestimmten Menge des Mittels (4),
- eine Pumpeneinrichtung (12) zum Pumpen der bestimmten Menge des Mittels (4) aus dem Behälter (3) über den Kanal (9) und zum Anwenden der bestimmten Menge des Mittels (4) über die Verteilungseinrichtung (16),
- eine einstellbare Steuereinrichtung (14) zum Steuern der Dosiervorrichtung (12), so dass eine festgelegte Menge des Mittels (4) pro festgelegter Zeitspanne dosiert wird,
- Messeinrichtungen zum Bestimmen einer Menge von Gülle (11) in dem Raum (10), wobei die Messeinrichtungen mit der Steuereinrichtung (14) gekoppelt sind, um eine Menge des Mittels (4) entsprechend der bestimmten Menge an Gülle (11) festzulegen,
- eine Aufzeichnungseinrichtung zum Aufzeichnen und Speichern der Mengen des pro Zeitspanne dosierten Mittels (4) über eine bestimmte Zeitdauer, die länger als die genannte Zeitspanne ist,
wobei der Schritt a) von der Dosiervorrichtung (12) durchgeführt wird, und
wobei der Schritt b) stattfindet, indem die bestimmte Menge des Mittels unter Verwendung der Pumpeinrichtung (12) aus dem Behälter gepumpt wird und die bestimmte Menge des Mittels über den Kanal (9) und die Verteilungseinrichtung (16) in einer verteilten Weise auf Gülle angewendet wird,
und wobei der Schritt c) von der Aufzeichnungseinrichtung durchgeführt wird.

## Revendications

1. Dispositif (2) pour appliquer une quantité déterminée d'une substance de traitement de fumier (4) à du fumier (11), comprenant :
- un récipient (3) pour contenir la substance (4) ;
- un conduit (9) qui est relié à une première extrémité pour un écoulement de milieu au récipient (3), et dont une deuxième extrémité s'étend dans un espace (10) contenant le fumier (11) ;
- un moyen de distribution (16) relié à la deuxième extrémité du conduit (9) dans le but d'une application distribuée de la substance (4) au-dessus du fumier (11) ;
- un dispositif de dosage (12) pour doser la quantité déterminée de la substance (4),
- un moyen de pompage (12) pour pomper la quantité déterminée de la substance (4) hors du récipient (3) via le conduit (9) et pour appliquer la quantité déterminée de la substance (4) via le moyen de distribution (16),
- un moyen de commande réglable (14) pour commander le dispositif de dosage (12) de sorte qu'une quantité réglée de substance (4) soit dosée par période réglée de temps,
et
- un moyen d'enregistrement pour enregistrer et stocker, pour une durée de temps déterminée qui est supérieure à ladite période de temps, les quantités de substance (4) dosées par période de temps, **caractérisé en ce qu'**il comprend des moyens de mesure pour déterminer une quantité de fumier (11) dans l'espace (10), dans lequel les moyens de mesure sont couplés au moyen de commande (14) pour régler une quantité de substance (4) en fonction de la quantité déterminée de fumier (11).

2. Dispositif selon la revendication 1, comprenant un deuxième récipient (5) pour contenir un support de liquide pour la substance (4), dans lequel la première extrémité du conduit (9) comprend deux branches (7, 8) et dans lequel une première branche (7) de la première extrémité est reliée pour un écoulement de milieu au récipient (3) et une deuxième branche (8) de la première extrémité est reliée de l'écoulement de milieu au deuxième récipient (5).

3. Dispositif selon la revendication 2, dans lequel chaque branche (7, 8) de la première extrémité comprend une vanne réglable (19, 20) pour respectivement fermer et laisser libre la liaison d'écoulement de milieu à respectivement le récipient (3) et le deuxième récipient (5), lesquelles vannes (19, 20) sont réglables entre une première position, dans laquelle la liaison d'écoulement de milieu à respectivement le récipient (3) et le deuxième récipient (5) est fermée, et une deuxième position dans laquelle la liaison d'écoulement de milieu à respectivement le récipient (3) et le deuxième récipient (5) est laissée libre, et dans lequel la vanne (19) de la première branche (7) est configurée pour se déplacer dans chaque cas avec un retard déterminé par rapport à la vanne (20) de la deuxième branche (8) entre la première position et la deuxième position.

4. Utilisation d'un dispositif (2) selon l'une quelconque des revendications précédentes pour appliquer une quantité déterminée d'une substance de traitement de fumier (4) à du fumier (11).

5. Méthode pour appliquer une quantité déterminée d'une substance de traitement de fumier (4) à du fumier (11), comprenant les étapes de :
a) dosage de la quantité déterminée de la substance (4) par période réglée de temps ;
b) application de la quantité déterminée de la substance (4) de manière distribuée au-dessus du fumier (11) ; et
c) enregistrement et stockage, pour une durée de temps déterminée qui est supérieure à ladite période de temps, des quantités de substance (4) dosées par période de temps,
dans laquelle la méthode est réalisée avec un dispositif (2) selon l'une quelconque des revendications 1-3, comprenant l'étape, à réaliser avant les étapes a) et b), de :
d) fourniture du dispositif (2) selon l'une quelconque des revendications 1-3, ce dispositif comprenant :
- un récipient (3) pour contenir la substance (4) ;
- un conduit (9) relié à une première extrémité pour un écoulement de milieu au récipient (3), et dont une deuxième extrémité s'étend dans un espace (10) contenant le fumier (11) ;
- un moyen de distribution (16) relié à la deuxième extrémité du conduit (9) dans le but d'une application distribuée de la substance (4) au-dessus du fumier (11) ;
- un dispositif de dosage (12) pour doser la quantité déterminée de la substance (4),
- un moyen de pompage (12) pour pomper la quantité déterminée de la substance (4) hors du récipient (3) via le conduit (9) et pour appliquer la quantité déterminée de la substance (4) via le moyen de distribution (16),
- un moyen de commande réglable (14) pour commander le dispositif de dosage (12) de sorte qu'une quantité réglée de substance (4) soit dosée par période réglée de temps,
- des moyens de mesure pour déterminer une quantité de fumier (11) dans l'espace (10), dans lequel les moyens de mesure sont couplés au moyen de commande (14) pour régler une quantité de substance (4) en fonction de la quantité déterminée de fumier (11),
- un moyen d'enregistrement pour enregistrer et stocker, pour une durée de temps déterminée qui est supérieure à ladite période de temps, les quantités de substance (4) dosées par période de temps
dans laquelle l'étape a) est réalisée par le dispositif de dosage (12), et
dans laquelle l'étape b) a lieu par pompage de la quantité déterminée de la substance hors du récipient en utilisant le moyen de pompage (12) et par application de la quantité déterminée de la substance (4) de manière distribuée à du fumier via le conduit (9) et le moyen de distribution (16),
et dans laquelle l'étape c) est réalisée par ledit moyen d'enregistrement.
